Europäisches Patentamt

European Patent Office

Office européen des brevets

(19)

(11) Veröffentlichungsnummer: **0 032 536**
**B1**

# (12) EUROPÄISCHE PATENTSCHRIFT

(45) Veröffentlichungstag der Patentschrift:
**22.02.84**

(21) Anmeldenummer: **80107007.9**

(22) Anmeldetag: **13.11.80**

(51) Int. Cl.³: **B 21 B 37/10,** B 21 B 39/00

(54) **Vorrichtung zur Erzielung einer gleichmässigen Temperaturverteilung in einem heissen Stahlband während des Walzprozesses.**

(30) Priorität: **18.01.80 DE 3001684**

(43) Veröffentlichungstag der Anmeldung:
**29.07.81 Patentblatt 81/30**

(45) Bekanntmachung des Hinweises auf die Patenterteilung:
**22.02.84 Patentblatt 84/8**

(84) Benannte Vertragsstaaten:
**AT BE FR GB IT LU**

(56) Entgegenhaltungen:
**EP - A - 0 005 340**
**DE - A - 1 452 102**
**FR - A - 1 416 688**
**US - A - 3 606 778**

(73) Patentinhaber: **Hoesch Werke Aktiengesellschaft,
Eberhardstrasse 12, D-4600 Dortmund 1 (DE)**

(72) Erfinder: **Kopineck, Hermann-Josef, Prof. Dr.,
Wildbannweg 36, D-4600 Dortmund 50 (DE)**
Erfinder: **Tappe, Wilhelm, Dr., Wulfskamp 23,
D-4600 Dortmund 16 (DE)**
Erfinder: **Fabian, Wolfgang, Dipl.-Ing., Lütgenholthauser
Strasse 90, D-4600 Dortmund 50 (DE)**

## Vorrichtung zur Erzielung einer gleichmäßigen Temperaturverteilung in einem heißen Stahlband während des Walzprozesses

Die Erfindung betrifft eine Vorrichtung zur Erzielung einer gleichmäßigen Temperaturverteilung in einem heißen Stahlband während des Walzprozesses, wobei das Stahlband auf einem Rollgang von der Vor- zur Fertigstraße transportiert wird und partiell im Kantenbereich abgedeckt ist, wobei über den Bandkanten jeweils Wärmestrahlungsreflektoren angeordnet sind, die das Stahlband zur Mitte hin noch um ein Maß überdecken.

Die modernen Technologien stellen besondere Anforderungen an die Gleichmäßigkeit der Eigenschaftswerte gewalzter Warmbänder, insbesondere Warmbreitbänder, über Breite und Länge dieser Bänder. Diesen Anforderungen wird bereits im Stahlwerk u. a. durch vermehrte Anwendung der Stranggußtechnik etc. Rechnung getragen. In den Breitbandwalzstraßen erfahren die Walzbrammen zunächst in den Vorstraßen eine erste Verformung um ca. 60 – 80%. Das dabei gewalzte Vorband wird über einen Rollgang zur Fertigstraße gebracht. Wegen des relativ langsamen Einlaufs in die Fertigstraße kühlt das noch auf dem Rollgang befindliche Vorband dabei sehr unterschiedlich über Bandlänge und Bandbreite ab. Der ersteren versucht man durch die Beschleunigung des Walzvorganges in der Fertigstraße mittels des sog. speed up Rechnung zu tragen. Gegen die unterschiedliche Abkühlung über die Breite der Bänder ist bisher noch keine betrieblich erfolgreiche Maßnahme gefunden worden. In einem bekannten Vorschlag wird eine vollständige Abdeckung des Rollganges vorgenommen. Diese erfordert aber wegen der starken Temperaturbelastung, vor allem im mittleren Teil, einen besonders großen baulichen Aufwand bzw. besonders große Instandhaltungskosten. Sie ist damit unwirtschaftlich und nicht betriebsgerecht.

Des weiteren ist vorgeschlagen worden, die Bandkanten mittels einer zusätzlichen Heizung auf die Temperatur der Bandmitte anzuheben. Um Energie zu sparen, und um dadurch gegebenenfalls die Temperaturen in der Vorstraße zu senken, muß man aber anstreben, den Wärmeverlust und insbesondere den unterschiedlichen Wärmeverlust auf dem Rollgang in betriebssicherer Weise zu verhindern.

Aus der DE-A-1 452 102 ist ein Verfahren und eine Vorrichtung bekannt, das bzw. die eine Steuerung des Temperaturverlaufes über die Bandlänge zwischen Vor- und Fertigstraße erlaubt, nicht aber über die Bandbreite. Außerdem werden dort wärmeisolierende und wärmeabsorbierende Materialien verwendet, womit eine starke Wärmebelastung des Systems mit großem Wartungsaufwand gegeben ist.

Ferner zeigt noch die EP-A1-0 005 340 eine Einrichtung zum Abdecken von heißem Stahlband der eingangs genannten Art, die aber nur oberhalb des Stahlbandes wirkt und somit eine optimale gleichmäßige Temperaturverteilung über die Bandbreite nicht gewährleistet.

Es ist daher Aufgabe der Erfindung, eine Vorrichtung der eingangs genannten Art zu finden, durch die auf besonders wirtschaftliche und einfache Weise eine gleichmäßige Temperaturverteilung über die Bandbreite und Bandlänge eines heißen Stahlbandes zwischen Vor- und Fertigstraße eines insbesondere Warmbreitbandwalzwerkes erreicht werden kann.

Nach der Erfindung wird die Aufgabe dadurch gelöst, daß die Wärmestrahlungsreflektoren, die in der Formgebung als Teilstück eines Kegelschnittes, insbesondere als Kreisbogen- bzw. Ellipsenbogenstück ausgebildet sind, derart angeordnet sind, daß sie die Bandkanten zur Seite im Abstand r umschließen, zur Mitte hin das Stahlband jeweils noch etwa r/2 weit überdecken, und daß die Mittelpunkte M bzw. Brennpunkte der Wärmestrahlungsreflektoren im Randbereich des Stahlbandes liegen, wobei beim Kreisbogenstück r der Kreisbogenradius und beim Ellipsenbogenstück r der Mittelwert der beiden Ellipsenhalbachsen ist.

In zweckmäßiger Weise bestehen die Wärmestrahlungsreflektoren aus mehreren längsgerichteten Teilstücken, von denen jedes Teilstück eine ebene, kreisbogenförmige und/oder eine ellipsenbogenförmige Form hat, wobei die Teilstücke auf einem Kreisbogen angeordnet sind, dessen Mittelpunkt M etwa r/4 von der Bandkante zur Bandmitte entfernt ist, und daß zwischen den einzelnen Teilstücken Spalten vorhanden sind.

Ferner ist es möglich, daß die seitlich der Bandkante befindlichen Teilstücke eben sind, deren Normalenrichtung auf die Bandkante weist, während die über der Bandkante befindlichen Teilstücke ellipsenbogenförmige Form haben, wobei alle Teilstücke auf einem Kreisbogen um den Mittelpunkt M angeordnet sind.

In vorteilhafter Weise sind die Wärmestrahlungsreflektoren auf die jeweilige Bandbreite einfahrbar, wobei zur Erfassung der tatsächlichen Breitenwerte das Band durch entsprechende Geber wie FS-Kamera, Diodenzeilendetektoren oder scannende IR-Detektoren während des Laufes auf dem Rollgang überwacht wird und diese Breitenwerte zur beidseitig getrennten Einstellung der Wärmestrahlungsreflektoren verwendet werden.

Ebenfalls ist es vorteilhaft, wegen der notwendigen Wartungsarbeiten und Verfügbarkeit des Rollgangs bei Störungen, daß die Wärmestrahlungsreflektoren aus dem Rollgangsbereich hochklappbar und seitlich wegbringbar sind.

Auch ist es zweckmäßig, wenn die Wärmestrahlungsreflektoren in mehrere Längsabschnitte unterteilt sind, wobei in den Zwischenräumen z. B. das Band überwachende Detektoren angeordnet sind. Vorzugsweise werden die genannten scannenden Strahlungsmeßgeräte verwendet, die zugleich eine Temperaturmessung über die Bandbreite ermöglichen. Die Rand-Mitte-Abweichungen der Temperatur werden dazu benutzt, die Reflektoren nach Höhe und Seite so zu verstellen, daß die Abstrahlung so verringert wird, daß die genannten Abweichungen kleiner als 10°C werden. Wenn es wider Erwarten bei besonders langsam zu walzenden Stählen nicht gelingt, die Temperaturdifferenz unter diesen Wert zu bringen, so ist vorgesehen, zwischen zwei Reflektorgruppen oder am Ende der letzten Reflektorgruppe eine an sich bekannte Aufheizanlage anzuordnen, die eine zusätzliche Wärmezufuhr zu den Bandkanten ermöglicht. Schließlich ist es von großem Vorteil, wenn jeweils die Wärmestrahlungsreflektoren ein sehr niedriges Absorptionsvermögen aufweisen und aus mehreren Blechen bestehen, die parallel mit Abstand zueinander angeordnet und in einem Rahmen miteinander verbunden sind, wobei die zueinander hingerichteten inneren Oberflächen ein hohes Reflexionsvermögen für Wärmestrahlung haben und das dem heißen Stahlband zugewandte Blech relativ dünn ist.

Die Vorteile der Vorrichtung nach der Erfindung sind insbesondere darin zu sehen, daß auf besonders einfache und wirtschaftliche Weise eine gleichmäßige Temperaturverteilung über die Bandbreite und Bandlänge erreicht wird, wobei nicht nur die stärkere Abkühlung der Bandkanten verhindert wird, sondern generell eine verminderte Temperaturabstrahlung des Bandes die Folge ist und zudem die Schwierigkeiten mit der zu großen Wärmebelastung der Reflektoren vermieden werden.

In der Zeichnung ist die Erfindung anhand von schematischen Ausführungsbeispielen näher erläutert:

Es zeigt

Fig. 1 die Vorrichtung im Schnitt,

Fig. 2 eine Ausführungsform der Wärmestrahlungsreflektoren im Schnitt,

Fig. 3 eine andere Ausführungsform der Wärmereflektoren im Schnitt,

Fig. 4 eine weitere Ausführungsform der Wärmestrahlungsreflektoren im Schnitt,

Fig. 5 den Aufbau eines Wärmestrahlungsreflektors in der Perspektive.

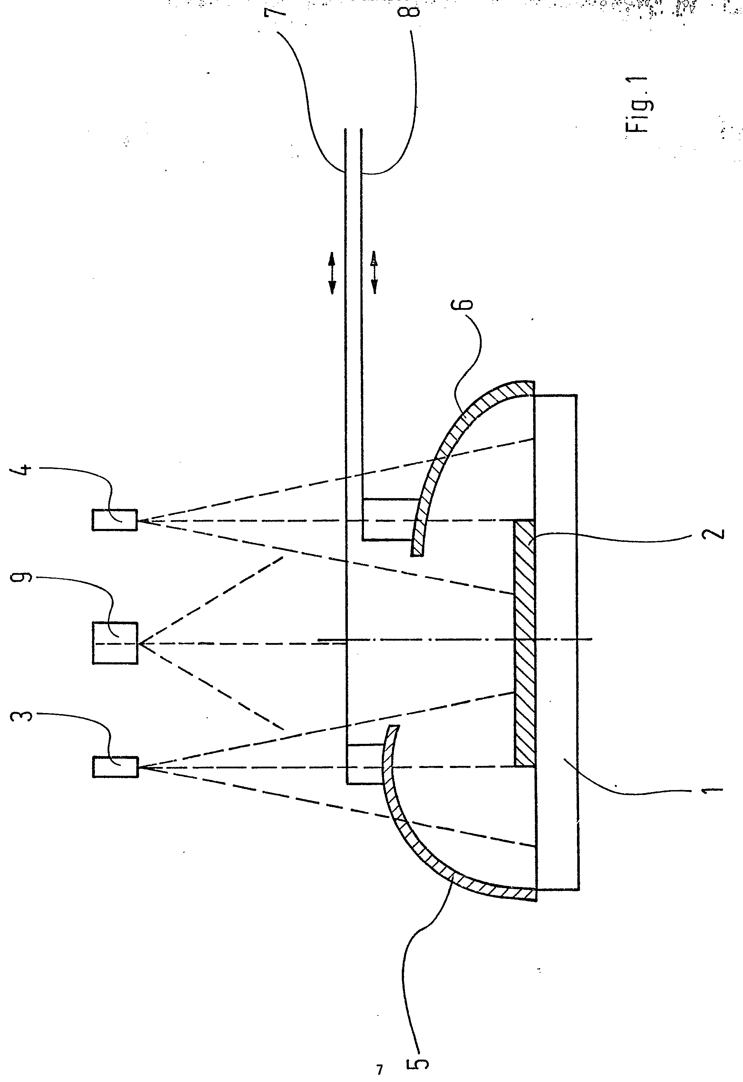

Wie die Fig. 1 zeigt, wird ein auf einem Rollgang 1 zwischen der nicht dargestellten Vor- und Fertigstraße eines Warmbandwalzwerkes zu transportierendes heißes Stahlband 2 partiell im Kantenbereich mittels kreisförmiger 5 oder ellipsenförmiger 6 Wärmestrahlungsreflektoren abgedeckt, wobei die Bandkanten zur Seite hin im Abstand r von den Wärmestrahlungsreflektoren 5, 6 umschlossen werden, und zur Mitte hin das Stahlband 2 noch etwa um r/2 überdeckt wird. Verschiebevorrichtungen 7, 8 gestatten eine getrennt gesteuerte seitliche und vertikale Bewegung beider Wärmestrahlungsreflektoren 5, 6. Detektoren 3, 4 sind zwischen den einzelnen Längsabschnitten der Wärmestrahlungsreflektoren 5, 6 über den Bandkanten angeordnet und überwachen den Bandablauf und/oder die Temperatur des Stahlbandes 2 und steuern die Verschiebevorrichtungen 7, 8. Die Detektoren 3, 4 können auch als ein Detektor 9 ausgebildet sein und über der Mitte des Stahlbandes 2 angeordnet sein.

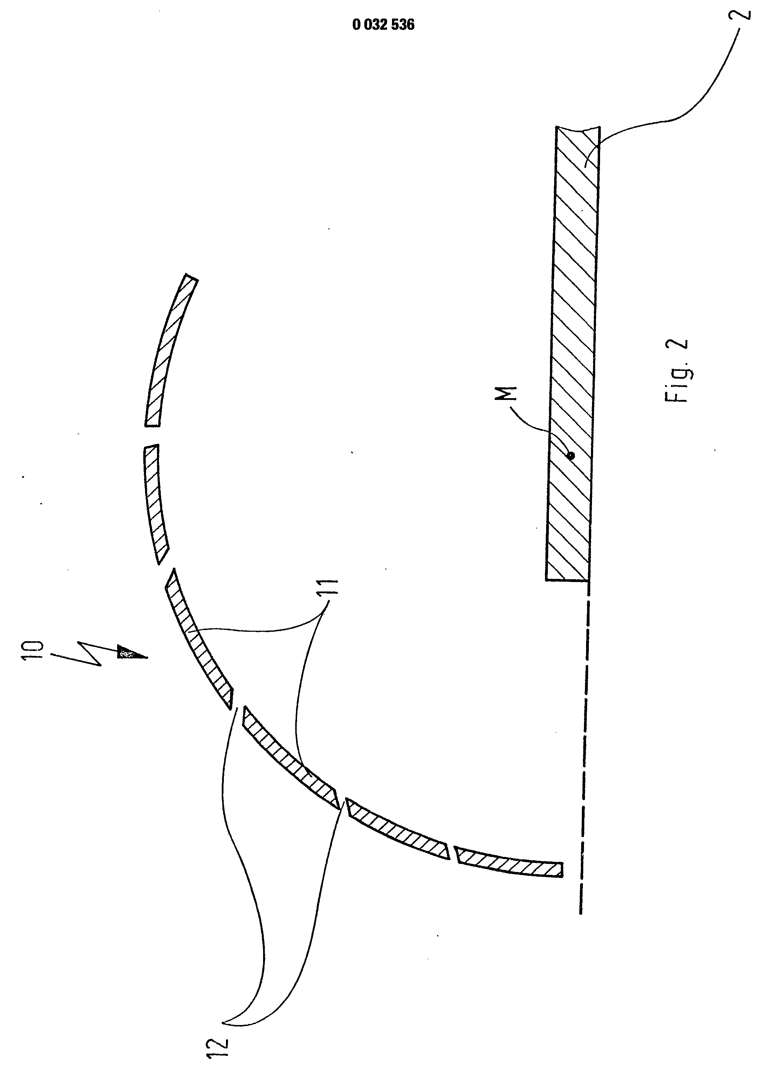

Die Fig. 2 zeigt einen kreisbogenförmigen Wärmestrahlungsreflektor 10 über der Bandkante des Stahlbandes 2, der aus mehreren längsgerichteten Teilstücken 11 besteht, zwischen denen Spalten 12 vorhanden sind, wobei der Mittelpunkt M des kreisbogenförmigen Wärmestrahlungsreflektors 10 im Randbereich des Stahlbandes 2 liegt.

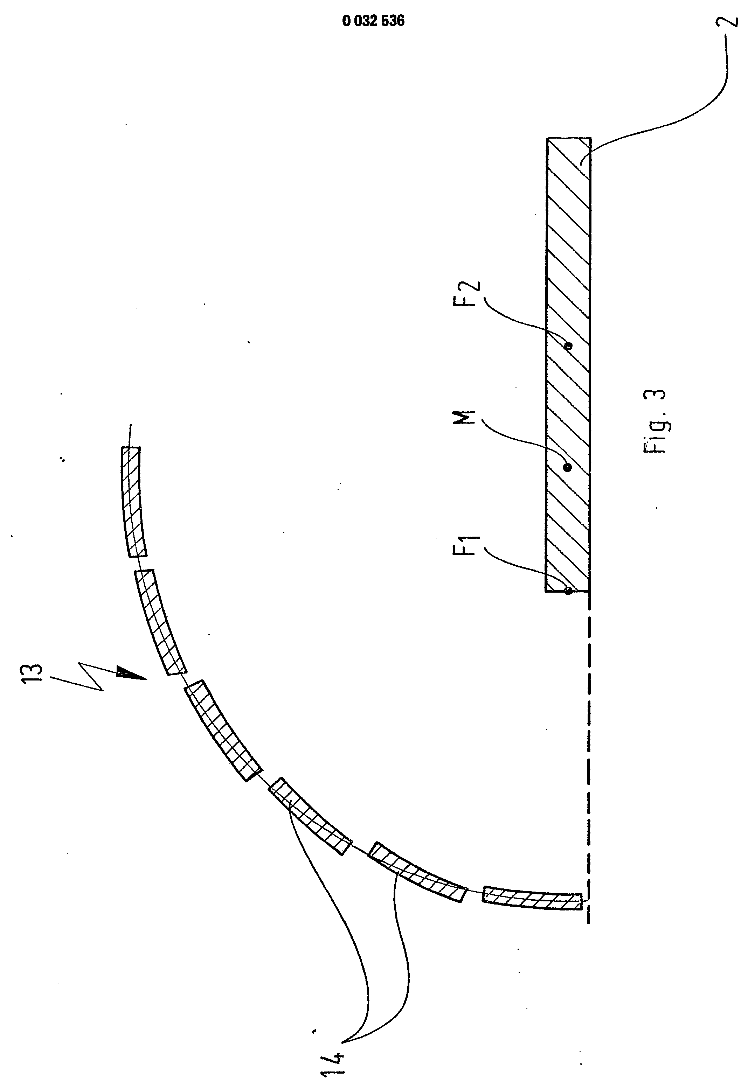

Die Fig. 3 zeigt einen Wärmestrahlungsreflektor 13, der aus mehreren ellipsenbogenförmigen längsgerichteten Teilstücken 14 mit den Brennpunkten F1 und F2 besteht, wobei diese Teilstücke 14 auf einer Kreisbahn mit dem Mittelpunkt M, der im Randbereich des Stahlbandes 2 liegt, angeordnet sind.

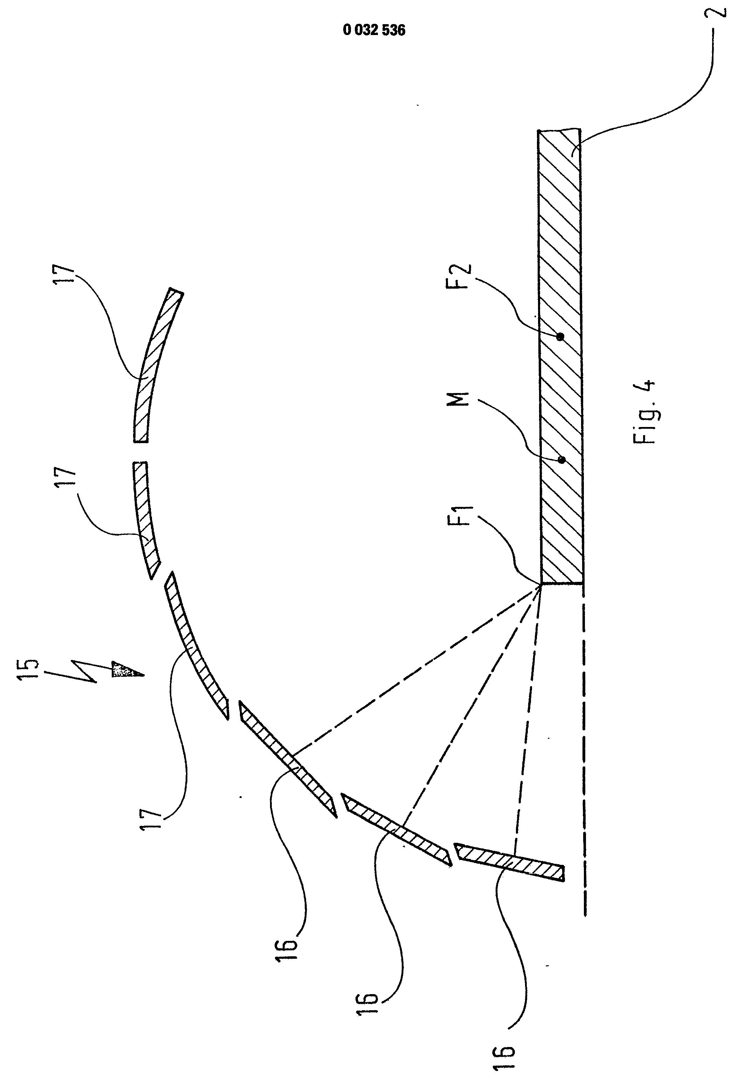

Die Fig. 4 zeigt einen Wärmestrahlungsreflektor 15, der aus mehreren längsgerichteten ebenen Teilstücken 16, deren Normalenrichtung auf die Bandkante weist, und mehreren ellipsenbogenförmigen Teilstücken 17 mit den Brennpunkten F1 und F2 besteht, wobei alle Teilstücke 16, 17 auf einer Kreisbahn mit dem Mittelpunkt M, der im Randbereich des Stahlbandes 2 liegt, angeordnet sind.

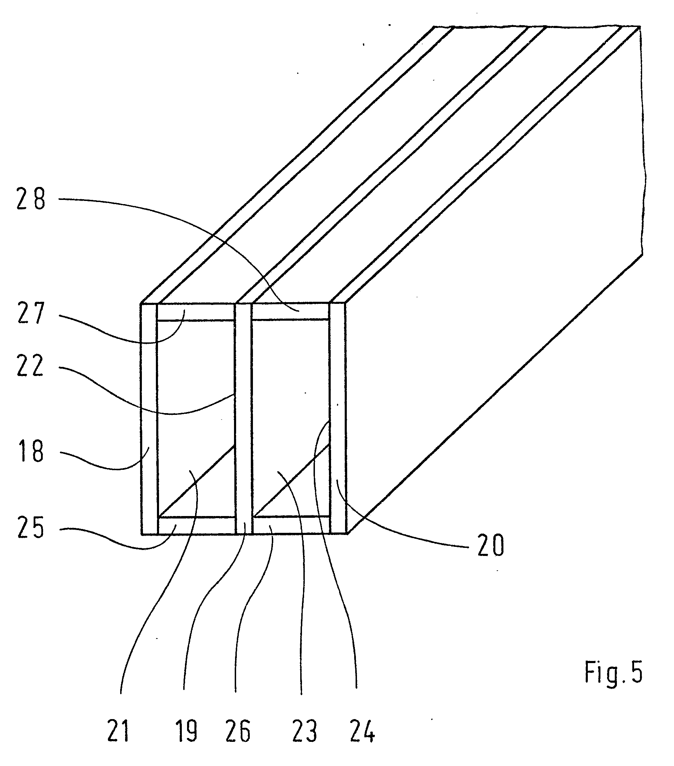

Wie aus der Fig. 5 hervorgeht, bestehen die Wärmestrahlungsreflektoren 5, 6, 10, 13, 15 aus z. B. drei Blechen 18, 19, 20, die parallel mit Abstand zueinander angeordnet sind. Die zueinander hingerichteten Oberflächen 21, 22 und 23, 24 haben ein hohes Reflexionsvermögen für Wärmestrahlung.

Das äußere, dem heißen Stahlband zugewandte Blech 20 ist relativ dünn, damit seine Wärmekapazität möglichst klein ist. Die anderen Bleche 18, 19 können dicker sein und so zur Stabilität beitragen. Die Bleche sind in einer nicht dargestellten Rahmenkonstruktion u. a. mit den Stegen 25, 26, 27, 18 so miteinander verbunden, daß in das Innere möglichst kein Staub etc. hineingelangen kann, wobei die Stege 25, 26, 27, 28 zwischen den Blechen 18, 19, 20 eine möglichst geringe Wärmeleitung besitzen. Insgesamt besitzen die Wärmestrahlungsreflektoren in bezug auf Strahlung und Konvektion eine möglichst kleine Wärmedurchgangszahl.

**Patentansprüche**

1. Vorrichtung zur Erzielung einer gleichmäßigen Temperaturverteilung in einem heißen Stahlband (2) während des Walzprozesses, wobei das Stahlband (2) auf einem Rollgang (1) von der Vor- zur Fertigstraße transportiert wird und partiell im Kantenbereich abgedeckt ist, wobei über den Bandkanten jeweils Wärmestrahlungsreflektoren (5, 6) angeordnet sind, die das Stahlband (2) zur Mitte hin noch um ein Maß überdecken, dadurch gekennzeichnet, daß die Wärmestrahlungsreflektoren (5, 6), die in der Formgebung als Teilstück eines Kegelschnittes, insbesondere als Kreisbogen- bzw. Ellipsenbogenstück ausgebildet sind, derart angeordnet sind, daß sie die Bandkanten zur Seite im Abstand r umschließen, zur Mitte hin das Stahlband (2) jeweils noch etwa r/2 weit überdecken, und daß die Mittelpunkte M bzw. Brennpunkte F1, F2 der Wärmestrahlungsreflektoren (5, 6) im Randbereich des Stahlbandes (2) liegen, wobei beim Kreisbogenstück r der Kreisbogen-Radius und beim Ellipsenbogenstück r der Mittelwert der beiden Ellipsenhalbachsen ist.

2. Vorrichtung nach Anspruch 1, dadurch gekennzeichnet, daß die Wärmestrahlungsreflektoren (10, 13, 15) aus mehreren längsgerichteten Teilstücken (11, 14, 16, 17) bestehen, von denen jedes Teilstück eine ebene (16), kreisbogenförmige (11) und/oder eine ellipsenbogenförmige Form (14, 17) hat, wobei die Teilstücke (11, 14, 16, 17) auf einem Kreisbogen angeordnet sind, dessen Mittelpunkt M etwa r/4 von der Bandkante zur Bandmitte entfernt ist, und daß zwischen den einzelnen Teilstücken (11, 14, 16, 17) Spalten (12) vorhanden sind.

3. Vorrichtung nach Anspruch 1 oder 2, dadurch gekennzeichnet, daß die Wärmestrahlungsreflektoren so ausgebildet sind, daß die seitlich der Bandkante befindlichen Teilstücke (16) eben sind, deren Normalenrichtung auf die Bandkante weist, während die über der Bandkante befindlichen Teilstücke (17) ellipsenbogenförmige Form haben, wobei alle Teilstücke (16, 17) auf einem Kreisbogen um den Mittelpunkt M angeordnet sind.

4. Vorrichtung nach einem der Ansprüche 1 bis 3, dadurch gekennzeichnet, daß die Wärmestrahlungsreflektoren (5, 6, 10, 13, 15) auf die jeweilige Bandbreite einfahrbar sind.

5. Vorrichtung nach einem der Ansprüche 1 bis 4, dadurch gekennzeichnet, daß die Wärmestrahlungsreflektoren (5, 6, 10, 13, 15) aus dem Rollgangsbereich hochklappbar und seitlich wegbringbar sind.

6. Vorrichtung nach einem der Ansprüche 1 bis 5, dadurch gekennzeichnet, daß die Wärmestrahlungsreflektoren (5, 6, 10, 13, 15) in mehrere Längsabschnitte unterteilt sind, wobei in den Zwischenräumen z. B. das Band überwachende Detektoren (3, 4, 9) angeordnet sind.

7. Vorrichtung nach einem der Ansprüche 1 bis 6, dadurch gekennzeichnet, daß zwischen zwei oder mehreren Längsabschnitten oder am Ende der Wärmestrahlungsreflektoren (5, 6, 10, 13, 15) eine zusätzliche Aufheizanlage für die Bandkanten angeordnet ist.

8. Vorrichtung nach einem der Ansprüche 1 bis 7, dadurch gekennzeichnet, daß jeweils die Wärmestrahlungsreflektoren (5, 6, 10, 13, 15) ein sehr niedriges Absorptionsvermögen aufweisen und aus mehreren Blechen (18, 19, 20) bestehen, die parallel mit Abstand zueinander angeordnet und in einem Rahmen (18, 19, 20) miteinander verbunden sind, wobei die zueinander hingerichteten, inneren Oberflächen (21, 22, 23, 24) ein hohes Reflexionsvermögen für Wärmestrahlung haben und das dem heißen Stahlband (2) zugewandte Blech (20) relativ dünn ist.

## Claims

1. Apparatus for attaining an even temperature distribution in a hot steel strip (2) during the rolling process, in which the steel strip (2) is transported on a roll table (1) from the roughing to the finishing mill and is partially covered at its edge region, heat radiation reflectors (5, 6) being arranged over edges, which to a certain extent cover the steel strip (2) towards its middle, characterised in that the heat radiation reflectors (5, 6) which are constructed in the form as portions of a conic section, particularly of circular or elliptic arcs, are so arranged that they enclose the edges at the side by a distance r and cover the steel strip (2) towards its middle by about r/2, and that the centre M or foci F1, F2 of the heat radiation reflextors (5, 6) lie(s) in the edge region of the steel strip (2), where, with a circular arc, r is the radius of the circle and, with an elliptical arc, r is the average of the two half axes of the ellipse.

2. Apparatus according to claim 1, characterised in that the heat radiation reflectors (10, 13, 15) comprise a plurality of longitudinally-directed portions (11, 14, 16, 17) each portion of which has a planar (16), circularly-arcuate (11) and/or an elliptically-arcuate (14, 17) shape, where the portions (11, 14,16, 17) are arranged in a circular arc the centre M of which is spaced by about r/4 from the edge of the strip towards its centre, and that gaps (12) are present between the individual portions (11, 14, 16, 17).

3. Apparatus according to claim 1 or 2, characterised in that the heat radiation reflectors are so formed that the portions (16) located to the side of the adges are planar, their normal directions being towards the strip edges, whereas the portions (17) located above the strip edges have an elliptically-arcuate form, all the portions (16, 17) being arranged in a circular arc about the mid-point M.

4. Apparatus according to any of claims 1 to 3, characterised in that the heat radiation reflectors (5, 6, 10, 13, 15) are retractable to the width of strip used.

5. Apparatus according to any of claims 1 to 4, characterised in that the heat radiation reflectors (5, 6, 10, 13, 15) can be folded up from the region of the roll table and removed laterally.

6. Apparatus according to any of claims 1 to 5, characterised in that the heat radiation reflectors (5, 6, 10, 13, 15) are divided into a plurality of longitudinal sections, detectors, for example for monitoring the strip, being arranged in the intermediate spaces.

7. Apparatus according to any of claims 1 to 6, characterised in that an additional heating device for the edges of the strip is arranged between two or more longitudinal sections or at the end of the heat radiation reflectors (5, 6, 10, 13, 15).

8. Apparatus according to any of claims 1 to 7, characterised in that the heat radiation reflectors (5, 6, 10, 13, 15) have a very low heating capacity and comprise several sheets (18, 19, 20), which are arranged parallel to and spaced from one another and are connected together in a frame (18, 19, 20), the inner mutually-facing surfaces (21, 22, 23, 24) having a high reflectivity for heat radiation and the sheet (20) facing the hot steel strip (2) being relatively thin.

## Revendications

1. Dispositif pour l'obtention d'une distribution de température uniforme dans un ruban d'acier (2) chaud durant le processus de laminage, la ruban d'acier (2) étant transporté sur un transporteur à rouleaux (1) du train dégrossisseur au train finisseur et recouvert partiellement dans la zone marginale, des réflecteurs de rayonnement thermique (5, 6) étant prévus chaque fois au-dessus des bords du ruban, lesquels réflecteurs recouvrent vers le milieu le ruban d'acier (2) encore pour une certaine part, caractérisé en ce que les réflecteurs (5, 6) qui ont la forme d'une pièce de section conique, en particulier cintrée en arc de cercle ou d'ellipse, sont disposés de façon telle qu'ils entourent les bords du ruban à une distance r du côté, recouvrent chaque fois le ruban d'acier (2) encore environ sur une distance r/2 vers le milieu et en ce que le centre M ou les foyers $F_1$, $F_2$ des réflecteurs de rayonnement thermique (5, 6) se trouvant dans la zone marginale du ruban d'acier (2), r étant dans le cas d'une pièce cintrée en arc de cercle, égal au rayon du cercle et dans le cas d'une pièce cintrée en arc elliptique, égal à la valeur moyenne des deux demi-axes d'ellipse.

2. Dispositif suivant la revendication 1, caractérisé en ce que les réflexteurs de rayonnement thermique (10, 13, 15) se composent de plusieurs pièces partielles (11, 14, 16, 17) orientées longitudinalement dont chaque pièce partielle a une forme plane (16), cintrée en arc de cercle (11) et/ou en arc d'ellipse (14, 17), les pièces partielles (11, 14, 16, 17) étant disposées sur un arc de cercle dont le centre M est distant d'environ r/4 du bord du ruban vers le milieu du ruban, et en ce que des intervalles (12) sont prévus entre les pièces partielles individuelles (11, 14, 16, 17).

3. Dispositif suivant la revendication 1 ou la revendication 2, caractérisé en ce que les réflecteurs de rayonnement thermique sont faits de façon telle que les pièces partielles (16) se trouvant latéralement aux côtés du ruban sont planes, leur direction normale étant orientée sur les bords du ruban, tandis que les pièces partielles (17) se trouvant au-dessus des bords du ruban ont une forme en arc d'ellipse, toutes les pièces partielles (16, 17) étant disposées sur un arc de cercle autour du point central M.

4. Dispositif suivant l'une des revendications 1 à 3, caractérisé en ce que les réflexteurs de rayonnement thermique (5, 6, 10, 13, 15) sont réglables à chaque largeur de ruban.

5. Dispositif suivant l'une des revendications 1 à 4, caractérisé en ce que les réflecteurs de rayonnement thermique (5, 6, 10, 13, 15) peuvent être repliés vers le haut et écartés latéralement hors de portée du transporteur à rouleaux.

6. Dispositif suivant l'une des revendications 1 à 5, caractérisé en ce que les réflexteurs de rayonnement thermique (5, 6, 10, 13, 15) sont subdivisés en plusieurs tronçons longitudinaux, des détecteurs (3, 4, 9) pour surveiller le ruban étant par exemple disposée dans les intervalles.

7. Dispositif suivant l'une des revendications 1 à 6, caractérisé en ce que entre deux ou plusieurs tronçons longitudinaux ou à l'extrémité des réflecteurs de rayonnement thermique (5, 6, 10, 13, 15) il est prévu un appareil de chauffage supplémentaire pour les bords du ruban.

8. Dispositif suivant l'une des revendications 1 à 7, caractérisé en ce que chaque fois les réflexteurs de rayonnement thermique (5, 6, 10, 13, 15) présentent un très faible pouvoir d'absorption et comportent plusieurs tôles (18, 19, 20) qui sont disposées parallèlement et à distance l'une de l'autre et sont reliées entre elles dans un cadre (18, 19, 20), la disposition étant telle que les surfaces internes (21, 22, 23, 24) orientées les unes vers les autres ont un fort pouvoir de réflexion pour le rayonnement thermique et que la tôle (20) tournée vers le ruban d'acier (2) chaud est relativement mince.

Fig. 1

Fig. 2

Fig. 3

Fig. 4

Fig.5